# EUROPEAN PATENT SPECIFICATION

(11) **EP 3 067 634 B1**
(45) Date of publication and mention of the grant of the patent: **30.12.2020**
(21) Application number: 16158620.1
(22) Date of filing: 04.03.2016
(51) Int. Cl.: F24F 11/00

(54) **A METHOD OF CONTROLLING THE VENTILATION OF ONE OR MORE ROOM SPACES AND A VENTILATION LEVEL CONTROL**
VERFAHREN ZUR STEUERUNG DER BELÜFTUNG EINES RAUMS ODER MEHRERER RÄUME UND EINE BELÜFTUNGSNIVEAUSTEUERUNG
PROCÉDÉ DE COMMANDE DE LA VENTILATION D'UN OU PLUSIEURS ESPACES ET COMMANDE DU NIVEAU DE VENTILATION

(30) Priority: 11.03.2015 FI 20150069
(43) Date of publication of application: 14.09.2016
(73) Proprietor: Laminix Oy, 00701 Helsinki (FI)
(72) Inventor: Grönlund, Christer, 01230 Vantaa (FI); Grönlund, Sami, 01280 Vantaa (FI)
(74) Representative: Heinonen & Co

(56) References cited:
- WO-A1-00/48752
- US-A1- 2010 057 258

## Description

This invention relates to a method of controlling the ventilation of one or more room spaces,
wherein the supply air and exhaust air dampers of one or more room spaces are adjusted in order to achieve a desired ventilation level, by taking into account any changes in the conditions and/or occupancy of the one or more room spaces, and wherein the voltage level of the control signals of the actuators of the supply air and exhaust air dampers is set by means of a level controller having analogous control signals for three or more ventilation levels, resulting in the desired ventilation level of the one or more room spaces.

### Background

In the future, the almost zero-energy building regulation will have an impact on the amount of ventilation in buildings as well. Due to the indoor air regulations and environmental problems, it is not recommended to ever entirely turn off the ventilation, not even at night-time. This will cause an increased space-specific need of ventilation control. This adaptation of ventilation is usually called "demand-controlled ventilation". The demand-controlled ventilation refers to that ventilation only is used in the amount necessitated by the indoor-air conditions and regulatory requirements.

Currently, there are two common ways for the space-specific ventilation control:
- a damper having an on/off actuator with only two adjustable positions.

The control takes place by mechanically restricting the movement of the actuator, or, manually restricting the movement of the damper. The damper is controlled by the principle voltage on/voltage off. The actual drawback of the on/off damper is that it only provides two ventilation control options.
- a damper having an actuator with a variable control. Sensors deliver information on the conditions, such as the temperature and carbon dioxide concentration, of the space to the control or a building automation system. During use, the control or building automation system tries to keep the temperature and carbon dioxide concentration in a range of set values by controlling the amount of air blown into the space. In practice, this takes place in such a way that the control or building automation system instructs the dampers, by means of a 0 to 10 V control signal, to change their adjusted position, i.e. to either increase or decrease the amount of air blown into or discharged out of the space. This device comes under the general product name of "air flow regulator". The air flow regulator also allows the ventilation to be turned up and turned down, respectively, for night-time, for example. In order to know how much air is blown into the space and discharged out of the space, the air flow regulator must continuously measure the amount of air flowing through it, usually by means of a dynamic measurement sensor. Contamination affects the measuring pressure of the dynamic measurement sensor, which, in turn, results in an unrequested change in the amount of air flowing through the air flow regulator. This drawback can be eliminated by having the air flow regulator repeatedly serviced. The dynamic measurement sensor can be replaced with a more inexpensive static measurement sensor less sensitive to contamination. The air flow regulator is usually controlled from the building automation system which must be programmed for this task.

Patent specification WO 00/48752 A1 discloses a method and a system to regulate the volume of supply air brought into a welding workshop via a supply air duct and/or the volume of extract air removed from the welding workshop via an exhaust air duct so as to achieve a level of ventilation proportional to the impurity load.

This invention aims at eliminating said drawbacks.

The method of the invention is characterized in that each of the analogous control signal voltage levels are individually adjusted, manually from a potentiometer, wherein a given voltage acts on the opening angle of the blade of the dampers to make it correspond to a given amount of air.

The invention also relates to a level controller allowing the actuators of the supply air and exhaust air dampers of one or more room spaces to be controlled in order to achieve a desired ventilation level, and allowing the voltage level of the control signals of the level controller to be defined, set or adjusted to three or more voltage levels acting on the actuators of the supply air and exhaust air dampers and, consequently, the opening angle of the blade of the dampers.

The level controller of the invention is characterized in that each of the voltage levels of the analogous control signals is individually adjustable, manually from a potentiometer, wherein a given voltage acts on the opening angle of the blade of the dampers to make it correspond to a given amount of air.

### Invention

An independently operating, maintenance-free level controller, wherein the voltage level of the control signals of the actuators of the dampers is manually set, when the ventilation is brought into use and adjusted, manually from a potentiometer, to make it correspond to a given amount of air. Therefore, it is unnecessary to continuously measure the air flow.

The level controller and the actuators of the dampers are powered by e.g. voltage of 24V. Because the level controller operates by chaining the control signals of multiple ventilation levels one after another, a change from one level to another takes places by means of a switch. For each level, the control signal voltage level can be steplessly set from a potentiometer when bringing it into use. These determined control signal voltage levels can be three or more in number. The control signal voltage level acts, through the actuator, on the opening angle (adjusted position) of the supply air or exhaust air damper.

An example of the operation of the level controller
a) control signal voltage level 1 = off/not in use ...is always on
   - the ventilation is on a minimum level
b) control signal voltage level 2 = present/home...
   - a change from voltage level 1 to voltage level 2 by a switch operation, which, in one implementation, is connected to a light switch in the space,
   - the ventilation level is based on the Finnish Building Code, Part D2, for example.
c) control signal voltage level 3 = turn up...
   - a change from voltage level 2 to voltage level 3 by a switch operation, which, in one implementation, is connected to a temperature sensor.
   - the ventilation level is double (2) compared to voltage level 2, for example.

When the level controller is brought into use, the amounts of air are measured and the control signal voltage levels are set from the potentiometer to achieve the desired ventilation by changing the opening angles of the dampers by means of the actuators.

Should the occupancy or purpose of the space change later, the set control signal voltage level can be altered from the potentiometer.

### How to set the control signals of the level controller

Connect the level controller to a 24V supply.

Start setting the control signals by turning the "Present/Home" and "Turn up" switch to OFF position.
A. How to set the air flow for Absent (minimum)
   1) Measure the air flow in the duct by a micro manometer or a terminal measuring point.
   2) Change the adjusted position of the damper by rotating the screw of the "Absent" potentiometers until the right air flow/control signal is reached.
B. How to set the air flow for Present/Home
   1. Turn the "Present" switch to ON position
   2. Measure the air flow in the duct by a micromanometer or a terminal measuring point.
   3. Change the adjusted position of the damper by rotating the screw of the "Present" potentiometers until the right air flow/control signal is reached.
C. How to set the air flow for "Turn up"
   1. Turn the "Turn up" switch to ON position
   2. Measure the air flow in the duct by a micromanometer or a terminal measuring point.
   3. Change the adjusted position of the damper by rotating the screw of "Turn up" potentiometers until the right air flow/control signal is reached.

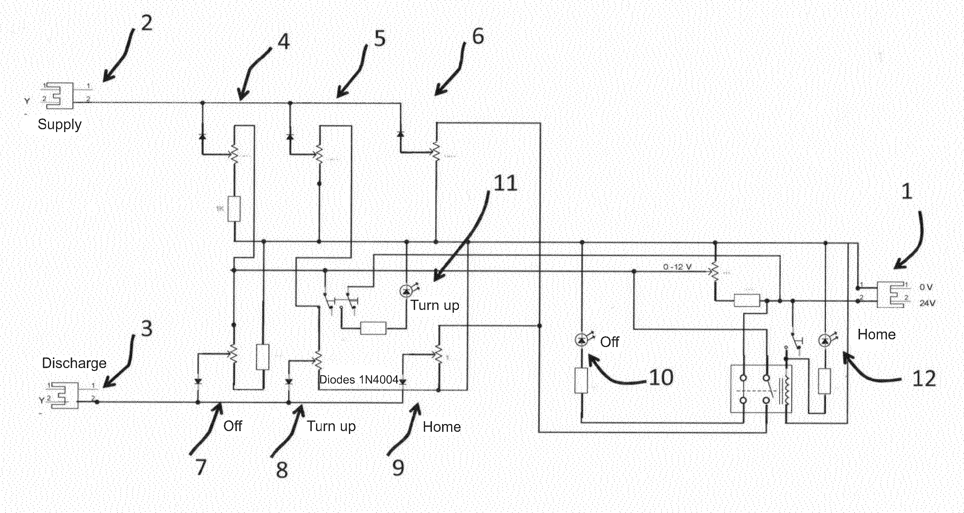

The accompanying figure is a schematic view of the invention.

A voltage supply 1 is shown to the right in the figure.

A supply air damper control signal 2 and an exhaust air damper control signal 2 of the level controller are shown to the left in the figure.

The "Absent" setting 4, the "Turn up" setting 5 and the "Home" setting 6 of the supply air device are shown in the upper part of the figure.

The "Absent" setting 7, the "Turn up" setting 8 and the "Home" setting 9 of the exhaust air device are shown in the lower part of the figure.

The light diodes 10, 11 and 12 indicate which of the modes is on, "Absent", "Turn up" and "Home".

## Claims

1. A method of controlling the ventilation of one or more room spaces, wherein the supply air and exhaust air dampers of one or more room spaces are adjusted in order to achieve a desired ventilation level, by taking into account any changes in the conditions and/or occupancy of the one or more room spaces, and wherein the voltage level of the control signals of the actuator of the supply air and exhaust air dampers is set by means of a level controller having analogous control signals (2, 3) for three or more ventilation levels, resulting in the desired ventilation level of the one or more room spaces, **characterized in that** each (4 - 9) of the voltage levels of the analogous control signals (2, 3) are individually adjusted, manually from a potentiometer, wherein a given voltage acts on the opening angle of the blade of the dampers to make it correspond to a given amount of air.

2. A level controller for carrying out the method of claim 1, allowing the actuators of the supply air and exhaust air dampers of one or more room spaces to be controlled in order to achieve a desired ventilation level, and allowing the voltage level of the control signals (2, 3) of the level controller to be defined, set or adjusted to three or more voltage levels acting on the actuators of the supply air and exhaust air dampers and, consequently, the opening angle of the blade of the dampers, **characterized in that** each (4 - 9) of the voltage levels of the analogous control signals (2, 3) are individually adjustable, manually from a potentiometer, wherein a given voltage acts on the opening angle of the blade of the dampers to make it correspond to a given amount of air.

## Patentansprüche

1. Verfahren zur Steuerung der Belüftung eines Raums oder mehrerer Räume, wobei die Zuluft- und Abluftregelklappen eines Raums oder mehrerer Räume unter Berücksichtigung der Änderungen der Bedingungen und/oder Belegung des einen Raums oder der mehreren Räume eingestellt werden, um ein gewünschtes Belüftungsniveau zu erreichen,
und wobei das Spannungsniveau der Steuersignale des Stellantriebs der Zuluft- und Abluftregelklappen mittels eines Niveausteuergeräts eingestellt wird, das analoge Steuersignale (2, 3) für drei oder mehr Belüftungsniveaus aufweist, was das gewünschte Belüftungsniveau des einen Raums oder der mehreren Räume zum Ergebnis hat,
**dadurch gekennzeichnet,**
**dass** jedes (4 - 9) der Spannungsniveaus der analogen Steuersignale (2, 3) einzeln, manuell von einem Potentiometer aus festgelegt wird, wobei eine gegebene Spannung auf den Öffnungswinkel des Blatts der Regelklappen einwirkt, damit dieser einer gegebenen Luftmenge entspricht.

2. Niveausteuergerät zum Ausführen des Verfahrens nach Anspruch 1, das es gestattet, dass die Stellantriebe der Zuluft- und Abluftregelklappen eines Raums oder mehrerer Räume gesteuert werden, um ein gewünschtes Belüftungsniveau zu erreichen, und es gestattet, dass das Spannungsniveau der Steuersignale (2, 3) des Niveausteuergeräts auf drei oder mehr Spannungsniveaus, die auf die Stellantriebe der Zuluft- und Abluftregelklappen und folglich den Öffnungswinkel des Blatts der Regelklappen einwirken, definiert, festgelegt oder eingestellt wird, **dadurch gekennzeichnet, dass** jedes (4 - 9) der Spannungsniveaus der analogen Steuersignale (2, 3) einzeln, manuell von einem Potentiometer aus einstellbar ist, wobei eine gegebene Spannung auf den Öffnungswinkel des Blatts der Regelklappen einwirkt, damit dieser einer gegebenen Luftmenge entspricht.

## Revendications

1. Procédé de régulation de la ventilation d'un ou plusieurs espaces d'habitation, dans lequel les registres d'air d'alimentation et d'air d'échappement d'un ou plusieurs espaces d'habitation sont ajustés de manière à obtenir un niveau de ventilation désiré, en prenant en compte n'importe quels changements des conditions et/ou de l'occupation d'un ou plusieurs espaces d'habitation,
et dans lequel le niveau de tension des signaux de commande de l'actionneur des registres d'air d'alimentation et d'air d'échappement est réglé au moyen d'un contrôleur de niveau ayant des signaux de commande analogiques (2, 3) pour trois ou plus niveaux de ventilation, donnant en résultat le niveau de ventilation désiré d'un ou plusieurs espaces d'habitation,
**caractérisé**
**en ce que** chacun (4 - 9) des niveaux de tension des signaux de commande analogiques (2, 3) sont ajustés individuellement, manuellement à partir d'un potentiomètre, dans lequel une tension donnée agit sur l'angle de l'ouverture du volet des registres afin de la faire correspondre à une quantité d'air donnée.

2. Contrôleur de niveau pour mettre en œuvre le procédé selon la revendication 1, permettant aux actionneurs des registres d'air d'alimentation et d'air d'échappement d'un ou plusieurs espaces d'habitation d'être régulés de manière à obtenir un niveau de ventilation désiré, et permettant au niveau de tension des signaux de commande (2, 3) du contrôleur de niveau d'être définis, réglés ou ajustés à trois ou plus niveaux de tension agissant sur les actionneurs des registres d'air d'alimentation et d'air d'échappement et, par conséquent, l'angle d'ouverture du volet des registres, **caractérisé en ce que** chacun (4 - 9) des niveaux de tension des signaux de commande analogiques (2, 3) agit sur l'angle d'ouverture du volet des registres pour le faire correspondre à une quantité d'air donnée.
